# EUROPÄISCHE PATENTANMELDUNG

(11) **EP 1 414 122 A1**
(43) Veröffentlichungstag der Anmeldung: **28.04.2004**
(21) Anmeldenummer: 03023415.7
(22) Anmeldetag: 17.10.2003
(51) Int. Cl.: H02B 1/052

(54) **Elektrische Einrichtung oder Adapter mit Mitteln zur Befestigung auf einer Tragschiene**

(30) Priorität: 26.10.2002 DE 20216516 U
(71) Anmelder: Moeller GmbH, 53115 Bonn (DE)
(72) Erfinder: Küpper, Wilfried, 53474 Bad Neuenahr (DE); Messer, Mario, 53227 Bonn (DE)

(57) **Zusammenfassung**

Die Erfindung betrifft eine elektrische Einrichtung oder Adapter mit Mitteln zur Befestigung auf einer Tragschiene (2) und weist ein Gehäuse (4) auf, das mit mindestens einem in dessen Rückwand ausgebildeten feststehenden Widerlager (6) zum Hintergreifen einer ersten Tragschienenkante (2a) sowie mit mindestens einem in Richtung zur Tragschiene (2) mit einer Federkraft (f) beaufschlagt gelagerten Schieber (8) zum Hintergreifen einer der ersten Tragschienenkante (2a) gegenüberliegenden zweiten Tragschienenkante (2b) ausgestattet ist. Der Schieber (8) weist erste Rastmittel und das Gehäuse (4) weist mit diesen zusammenwirkende zweite Rastmittel zur lösbaren Fixierung des Schiebers (8) in einer die zweite Tragschienenkante (2b) nicht hintergreifenden Entriegelungsposition (E) auf.

## Beschreibung

Die Erfindung betrifft eine elektrische Einrichtung oder Adapter mit Mitteln zur Befestigung auf einer Tragschiene nach dem Oberbegriff von Anspruch 1. Insbesondere betrifft die Erfindung elektrische Schaltgeräte wie Steuerungen, Schütze, Leistungsschalter, Leitungsschutzschalter, Motorschutzschalter sowie entsprechende Adapter oder Baugruppenträger hierfür.

Aus der Druckschrift DE 298 04 153 U1 ist bereits eine derartige Vorrichtung beziehungsweise ein derartiges Gerät vorbekannt. Der in der Vorrichtung verwendete Klemmschieber weist eine spitzförmige Ausnehmung zum Zwecke einer klemmend einschneidenden Fixierung der Vorrichtung auf der Tragschiene auf. Von Nachteil ist hierbei, dass sich das einmal auf der Tragschiene befestigte Gerät nur umständlich und schwergängig auf der Tragschiene verschieben lässt.

Ferner beschreibt die DE 100 56 817 C1 eine elektrische Einrichtung beziehungsweise einen Adapter mit Mitteln zur Befestigung auf einer Tragschiene bei welchem das zu befestigende Gehäuse rückseitig eine an die Tragschiene angepasste Ausnehmung aufweist. In der Ausnehmung sind gegenüberliegend starre Vorsprünge mit jeweils einer Gleitführung zur Aufnahme der Tragschiene vorgesehen. Um die Tragschiene in ihrer Aufnahme zu fixieren ist eine von der Gehäuseinnenseite her zugängliche Kurvenscheibe vorgesehen. In Abhängigkeit von der Position der Kurvenscheibe ist die Einrichtung verschiebbar oder nicht verschiebbar auf der Tragschiene befestigt. Diese Ausführung hat sich in der Praxis bewährt, ist jedoch in Herstellung und Handhabung recht aufwendig.

Der Erfindung liegt daher die Aufgabe zugrunde, eine Einrichtung zu schaffen, die die vorstehend genannten Nachteile beseitigt und die gleichzeitig konstruktionsmäßig einfach und somit kostengünstig herzustellen ist.

Ausgehend von einer Einrichtung der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Erfindungsgemäß weist die Einrichtung dem mindestens einen feststehenden Widerlager zum Hintergreifen einer ersten Tragschienenkante gegenüberliegend mindestens einen zur Längserstreckung der Tragschiene im wesentlichen senkrecht verschiebbaren, mit einer Federkraft in Richtung Tragschiene beaufschlagten Schieber zum Hintergreifen einer zweiten, der ersten Tragschienenkante gegenüberliegenden Tragschienenkante auf, der über Rastmittel in einer sogenannten Entriegelungsposition - in der der Schieber die Tragschienenkante nicht hintergreift - gehalten werden kann (fixierbar ist). Hierfür ist an dem Schieber vorzugsweise ein federbeweglich ausgebildeter Rastarm vorhanden, der durch einen auf dem Rastarm ausgebildeten Rastvorsprung in entsprechender Position mit einer Gehäusekante zusammenwirkt. Vorliegend ist der Rastarm einteilig mit dem Schieber als Kunststoffformteil ausgebildet. Alternativ kann der Rastarm auch als separates Teil, beispielsweise als aus einem Federblech bestehender mit dem Schieber verschraubter oder verklebter Rastarm ausgeführt sein. In einer anderen Ausführung ist ebenfalls denkbar umgekehrt am Gehäuse einen Federarm oder Rastvorsprung auszubilden, der mit einer Rastausnehmung im Schieber zusammenwirken könnte.
In der vorgesehenen Ausführungsform weist der Schieber eine Länge auf, die derart bemessen ist, dass der Schieber auch im Verriegelungszustand - in dem er die Tragschiene zumindest bereichsweise federbeaufschlagt hintergreift - mit seinem anderen Ende bereichsweise nicht nur rückseitig sondern auch von der Frontseite des Gehäuses her zugänglich und betätigbar ist. Zum Zwecke der Betätigung weist der Schieber beispielsweise eine Nut für den Eingriff eines Schraubendrehers auf.

Weitere Einzelheiten und Vorteile der Erfindung ergeben sich aus dem folgenden, anhand von Figuren erläuterten Ausführungsbeispiel. Es zeigen
- Figur 1:: eine erfindungsgemäße Einrichtung auf einer Tragschiene montiert in Perspektivdarstellung von der Unterseite mit Schieber in Verriegelungsposition;
- Figur 2:: die erfindungsgemäße Einrichtung in einer Ansicht gemäß Fig. 1 mit Schieber in Entriegelungsposition;
- Figur 3:: die erfindungsgemäße Einrichtung in Perspektivdarstellung in Draufsicht;
- Figur 3a:: einen Detailausschnitt gemäß Fig. 3;
- Figur 4:: die erfindungsgemäße Einrichtung gemäß Fig. 3 in Schnittdarstellung mit Schieber in Verriegelungsposition;
- Figur 4a:: einen Detailausschnitt gemäß Fig. 4;
- Figur 5:: die erfindungsgemäße Einrichtung gemäß Fig. 3 in Schnittdarstellung mit Schieber in Entriegelungsposition;
- Figur 5a:: einen Detailausschnitt gemäß Fig. 5 und
- Figur 6:: die erfindungsgemäße Einrichtung gemäß Fig. 3 mit demontiertem Schieber.

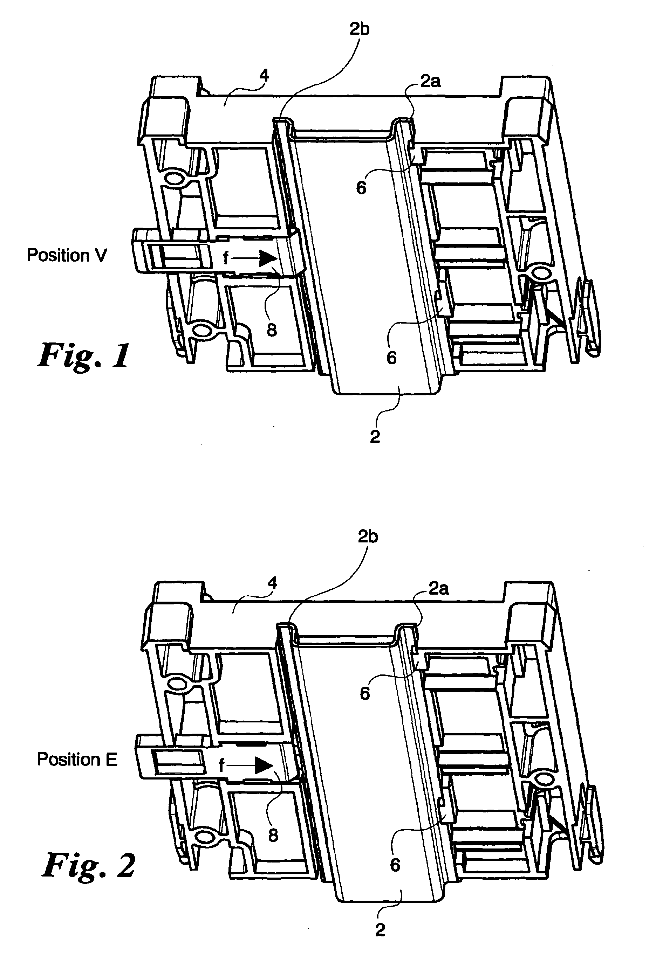

Fig. 1 zeigt ein auf einer Tragschiene 2 montiertes Gehäuse oder Gehäuseteil 4 als Bestandteil einer erfindungsgemäßen elektrischen Einrichtung. Dabei kann das Gehäuse 4 das fertige Grundgehäuse in Form eines Baugruppenträgers sein oder aber bloß das Gehäuseunterteil eines elektrischen Schaltgerätes. Das Gehäuse 4 weist auf seiner Rückseite vorzugsweise zwei feststehende Widerlager 6 zum Hintergreifen einer ersten Tragschienenkante 2a sowie einen senkrecht zur Längsachse der Tragschiene 2 in Richtung zur Tragschiene 2 mit einer Federkraft f beaufschlagt gelagerten Schieber 8 zum Hintergreifen einer der ersten Tragschienenkante 2a gegenüberliegenden zweiten Tragschienenkante 2b auf. Die Widerlager 6 sind bevorzugt als im Querschnitt L-förmig ausgebildete Haken ausgeführt, während der Schieber 8 als flaches Schieberelement, welches in einer senkrecht zur Verlaufsrichtung einer montierten Tragschiene 2 verlaufenden Ausnehmung 10 geführt ist. Die Ausnehmung weist mit Vorteil eine Tiefe auf die im wesentlichen der Dicke des Schiebers 8 entspricht, so dass der Schieber 8 bündig mit dem Gehäuseboden abschließt. Die Figur 1 zeigt die erfindungsgemäße Einrichtung mit Schieber 8 in Verriegelungsposition, in der der Schieber 8 die ihm zugewandte Tragschienenkante 2b kraftschlüssig bzw. kraft-formschlüssig hintergreift. In der Figur 2 ist die Vorrichtung mit Schieber 8 in Entriegelungsposition dargestellt. Deutlich erkennbar ist aus den Darstellungen, dass der Schieber 8 derart lang ausgebildet ist, dass er auch von der Frontseite der Einrichtung zugänglich ist. Bevorzugt weit der Schieber 8 zum Zwecke seiner Betätigung an seinem der Tragschiene abgekehrten Ende eine Ausnehmung für den Eingriff eines Werkzeuges auf.

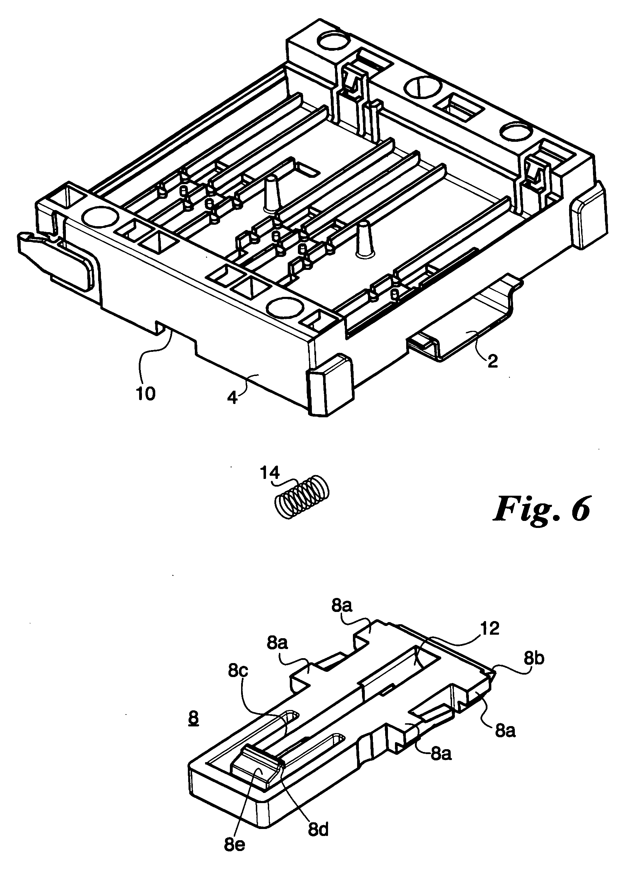

Eine bevorzugte Ausführung eines Schiebers 8 ist in der Figur 6 dargestellt. Dabei weist der Schieber 8 (vergrößert dargestellt) rechts und links seitliche Führungsfortsätze 8a auf, die zum einen der Längsführung des Schiebers 8 dienen und zum anderen den Schieber in seinem Bewegungsweg beidseitig begrenzen. Des Weiteren ist der Schieber 8 auf seiner dem Gehäuseboden zugekehrten Seite mit einer Ausnehmung 12 für eine mit einem Gehäusewiderlager zusammenwirkende und so die auf den Schieber 8 wirkende Federkraft f erzeugende Spiralfeder 14 versehen. An seiner der Tragschiene 2 zugekehrten Seite weist der Schieber 8 eine im Querschnitt gesehen dachförmig ausgebildete Rastnase 8b auf. Hiermit ist zumindest eine Einführschräge für die schnappende Montage der Einrichtung - bei der die Einrichtung einseitig mit ihren Widerlagern 6 in die erste Tragschienenkante 2a eingehängt und anderseitig einfach auf die Hutschiene aufgedrückt wird - realisiert. An seinem der Rastnase 8b abgekehrten Ende weist der Schieber 8 einen federnd ausgebildeten Rastarm 8c auf. Dabei ist der Rastarm 8c gebildet, in dem der Schieber 8 mit einer durchgängigen im wesentlichen U-förmigen Ausnehmung versehen ist. Damit der Schieber 8 in seiner Entriegelungsposition E fixierbar ist, ist auf dem Rastarm 8c an seinem freien Ende ein in Richtung Gehäuseboden, im wesentlichen senkrecht nach oben, gerichteter Rastvorsprung 8d ausgebildet. Dieser Rastvorsprung 8d wirkt in der Entriegelungsposition E (in der durch den verrasteten Schieber 8 die Einrichtung auf der Tragschiene 2 entriegelt ist) mit einer Seitenwand des Gehäuses 4 zusammen, die er hierfür hintergreift. In der Verriegelungsposition V, die der Schieber 8 im wesentlich gleich sowohl bei nicht montierter Einrichtung als auch bei fertig montierter Einrichtung stets einnimmt und aus der er nur während des Montagevorganges entgegen der Federkraft f herausgedrückt (bei Montage durch "Aufschnappen") oder herausgezogen (bei Montage durch "Aufsetzen") wird, liegt der Rastarm 8c mit seinem Rastvorsprung 8d in einer Öffnung des Gehäusebodens, so dass er nicht ständig belastet ist. Hierdurch kann die Federkraft f des Rastarms 8c längere Zeit erhalten bleiben und somit die Lebensdauer des Schiebers 8 verlängert werden. Um die Verschiebung des Schiebers 8 von der Entriegelungsposition E, in der der Rastarm 8c mit seinem Rastvorsprung in einer Öffnung des Gehäusebodens liegt, in die Verriegelungsposition V zu unterstützen ist der Rastarm 8c an seinem freien Ende mit einer Führungsschräge 8e versehen. Der Schieber 8 ist derart dimensioniert und gelagert, dass bei einer aufschnappenden Montage die Rastmittel von Schieber 8 (Rastarm 8c) und Gehäuse 4 (Seitenwand) gerade nicht rastend zusammenwirken und so eine erfindungsgemäße Einrichtung versehentlich in einer Entriegelungsposition E montiert würde.

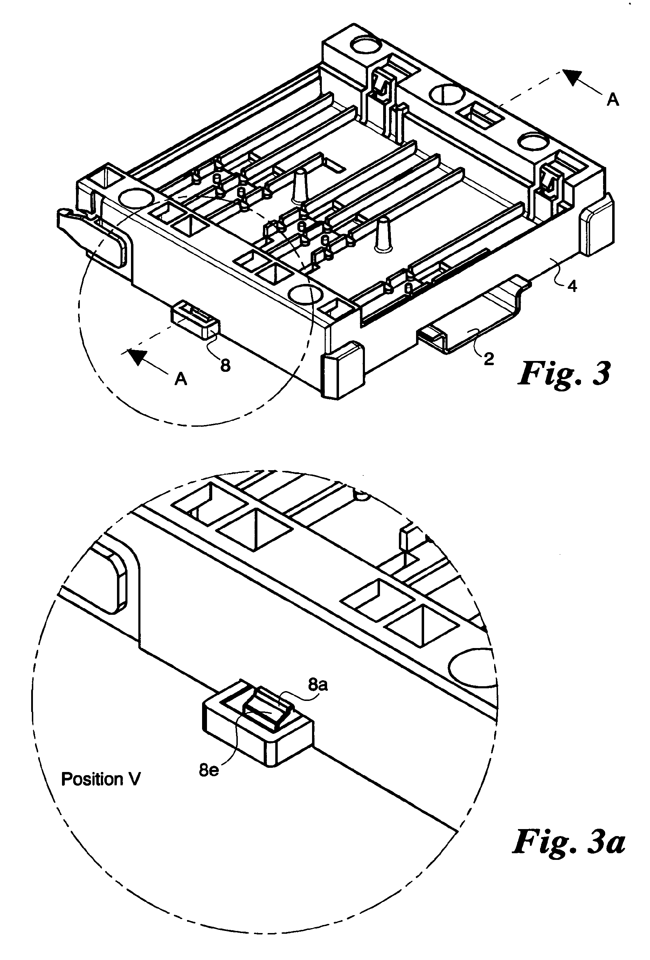

Figur 3 zeigt die erfindungsgemäße Einrichtung gemäß Figur 1 und 2 in einer perspektivischen Draufsicht. Bei der dargestellten Einrichtung handelt es sich um ein Gehäuseteil eines Basismoduls für eine kompakte speicherprogrammierbare Steuerung. Dabei kann ein Modul mit SPS-CPU und Netzteil auf das Basismodul aufgesteckt werden. In dem Falle würde das Basismodul lediglich als sogenannter mechanischer Geräteträger dienen. In einem anderen Fall nimmt das dargestellte Basismodul einen elektrischen Busabschnitt bestehend aus einer Leiterplatte mit Schnittstellenabschnitten für die linksseitige und/oder rechtsseitige Kopplung weiterer Busabschnittsmodule sowie einem Schnittstellenabschnitt für die frontseitige Aufnahme von weiteren steckbaren Funktionsmodulen.

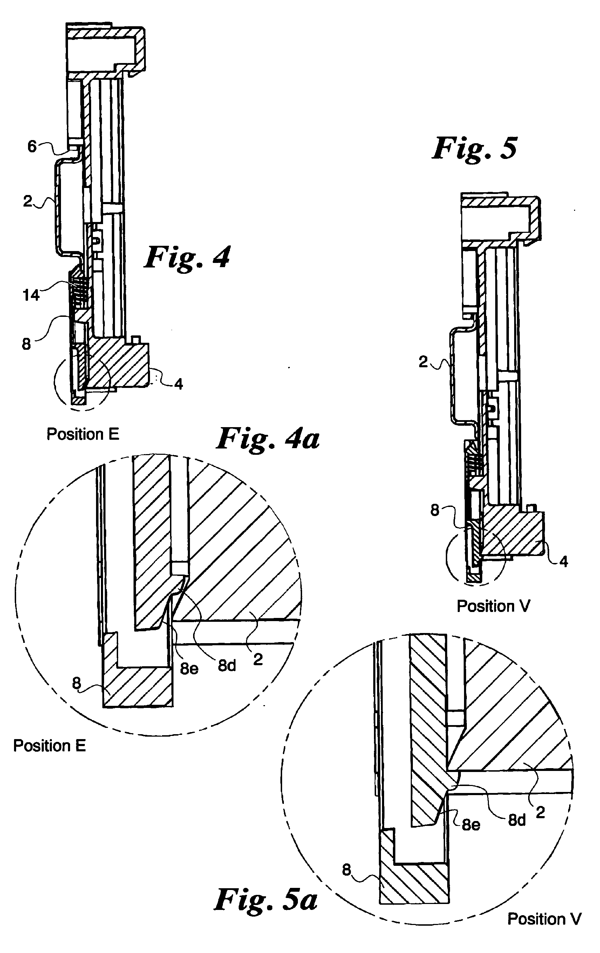

Die Figur 3a zeigt ausschnittweise die mechanische Verriegelung des Schiebers 8 mit der Seitenwand des Gehäuses im Bereich der Ausnehmung für die Schieberführung. Die Figuren 4, 4a sowie 5, 5a zeigen die erfindungsgemäße Einrichtung in einer Schnittdarstellung gemäß der Schnittlinie A-A einmal in entriegelter Schieberposition E und einmal in verriegelter Schieberposition V.

Die Erfindung ist beispielsweise ebenfalls dadurch realisierbar, dass der Rastarm 8c anstatt am Schieber 8 am Gehäuse 4 beziehungsweise Gehäuseboden ausgebildet ist und die zusammenwirkenden Gegen-Rastmittel wie Rastausnehmungen oder dergleichen am Schieber 8 ausgebildet sind oder anstelle einer echten Rastverbindung zwischen Schieber 8 und Gehäuse 4 eine rein kraftschlüssige Verbindung gewählt wird.

## Patentansprüche

1. Elektrische Einrichtung oder Adapter mit Mitteln zur Befestigung auf einer Tragschiene (2), aufweisend ein Gehäuse (4) mit mindestens einem in dessen Rückwand ausgebildeten feststehenden Widerlager (6) zum Hintergreifen einer ersten Tragschienenkante (2a) sowie mit mindestens einem senkrecht zur Längsachse der Tragschiene (2) in Richtung zur Tragschiene (2) mit einer Federkraft (f) beaufschlagt gelagerten Schieber (8) zum Hintergreifen einer der ersten Tragschienenkante (2a) gegenüberliegenden zweiten Tragschienenkante (2b), **dadurch gekennzeichnet, dass** der Schieber (8) erste Rastmittel und das Gehäuse (4) mit diesen zusammenwirkende zweite Rastmittel zur lösbaren Fixierung des Schiebers (8) in einer die zweite Tragschienenkante (2b) nicht hintergreifenden Entriegelungsposition (E) aufweist.

2. Einrichtung oder Adapter nach Anspruch 1, **dadurch gekennzeichnet, dass** die ersten Rastmittel als federnder Rastarm (8c) ausgebildet sind.

3. Einrichtung oder Adapter nach einem der vorstehenden Ansprüche, **dadurch gekennzeichnet, dass** die zweiten Rastmittel durch einen Kantenbereich einer Seitenwand des Gehäuses (4) gebildet sind.

4. Einrichtung oder Adapter nach Anspruch 1, **dadurch gekennzeichnet, dass** die ersten Rastmittel als Rastausnehmung im Schieber (8) ausgebildet sind und die zweiten Rastmittel durch einen am Gehäuse (4) angeordneten Rastarm gebildet sind.

5. Einrichtung oder Adapter nach Anspruch 1, **dadurch gekennzeichnet, dass** die ersten und zweiten Rastmittel durch eine rein kraftschlüssige Verbindung ausgeführt sind.

6. Einrichtung oder Adapter nach einem der vorstehenden Ansprüche, **dadurch gekennzeichnet, dass** der Schieber (8) eine Länge aufweist, die derart bemessen ist, dass der Schieber (8) sowohl in der entriegelten Position (E) als auch in der verriegelten Position (V) mit seinem der Tragschiene (2) abgekehrten Ende von der Frontseite des Gehäuses (4) her zugänglich ist.

7. Einrichtung oder Adapter nach vorstehendem Anspruch, **dadurch gekennzeichnet, dass** der Schieber (8) zum Zwecke seiner Betätigung an seinem der Tragschiene (2) abgekehrten Ende einen Eingriff für ein Werkzeug aufweist.

8. Einrichtung oder Adapter nach einem der vorstehenden Ansprüche, **dadurch gekennzeichnet, dass** der Schieber (8) in einer Ausnehmung (10) im Boden des Gehäuses (4) geführt ist.

9. Einrichtung oder Adapter nach vorstehendem Anspruch, **dadurch gekennzeichnet, dass** die Ausnehmung eine Tiefe aufweist derart, dass der montierte Schieber (8) bündig mit dem Gehäuseboden abschließt.
